# EUROPEAN PATENT APPLICATION

(11) **EP 4 660 825 A1**
(43) Date of publication of application: **10.12.2025**
(21) Application number: 25180878.8
(22) Date of filing: 04.06.2025
(51) Int. Cl.: G06F 16/242, G06F 16/248

(54) **APPLICATION SERVER AND METHOD FOR GENERATING DATA VISUALIZATIONS USING LARGE LANGUAGE MODELS**

(30) Priority: 04.06.2024 US 202463655995 P
(71) Applicant: Accenture Global Solutions Limited, Dublin 4 (IE)
(72) Inventor: WEI, Wei, Burlingame, CA 94010 (US); BAO, Yujia, Cambridge, MA 02139 (US); SHAH, Ankit Parag, Mountain View, CA 94040 (US); PARK, Su Min, San Francisco, CA 94041 (US); NOMELI, Mo, Rancho Cucamonga, CA 91737 (US); NARANG, Neeru, Woodland, CA 95776 (US); PEARSON, Natalie Elizabeth, Marina del Rey, CA 90292 (US); GHOSAL, Koustav, North Wall Quay, Dublin 1, D01F797 (IE); HE, Yuan, San Jose, CA 95113 (US); WEI, Jiaheng, Santa Clara, CA 95054 (US); WEERASOORIYA, Tharindu Cyril, Mountain View, CA 94041 (US); MEHTA, Ankit, Cambridge, MA 02139 (US); MIAO, Yingyu, Cupertino, CA 95014 (US); GUAN, Lan, New York, NY 10023 (US); ESCOBAR MORA, Gina Marcela, San Francisco, CA 94114 (US); LASHKEVICH, Daria, 1015 Riga (LV); SONG, Jingna, Mountain View, CA 94040 (US); BOULAY, Fabien, Keller, TX 76248 (US); HEJNA JR., Donald Joseph, Los Altos, CA 94022 (US)
(74) Representative: Müller-Boré & Partner Patentanwälte PartG mbB

(57) **Abstract**

Method, application server, and non-transitory computer-readable medium for generating data visualizations using Large Language Models (LLMs) are disclosed. In an aspect, a user query request is received for generating a visual representation of data. Further, the user query request is validated to determine whether the user query request is safe to accept. Based upon the validation, machine executable instructions corresponding to the user query request are generated using a Fortune Analytics Language Model (FALM). The FALM is a pretrained LLM. Furthermore, the machine executable instructions are executed. Based upon executing the machine executable instructions, a machine generated visual representation of the data is generated.

## Description

### CROSS-REFERENCE TO RELATED APPLICATION(S)

This application claims priority under 35 USC §119(e) to US Provisional Application No 63/655,995, filed on June 4, 2024, the entire content of which is hereby incorporated by reference in the entirety for all purposes.

### TECHNICAL FIELD

Various examples described herein relate generally to a method, an application server, and non-transitory computer readable medium for generating data visualizations. Specifically, the disclosed examples are directed to techniques for generating robust and customizable data visualizations using Large Language Models (LLMs).

### BACKGROUND

Data visualization is an essential tool for understanding and communicating insights from structured and unstructured data. Conventional data visualization tools often require users to possess technical expertise in data preprocessing, scripting, or working with specific visualization libraries. Thus, creating a barrier for broader adoption, especially among users who lack programming experience or domain-specific technical skills. Further, the conventional data visualization tools often lack the depth, flexibility, and scalability required to analyze various metrics across long-time horizons and across a wide spectrum of organizations.

### SUMMARY

Implementations of the present disclosure are generally directed to generate data visualizations using Large Language Models (LLMs). More particularly, implementations of the present disclosure are directed to generate accurate and scalable data visualizations of various metrics based on natural language queries.

In some examples, aspects of the subject matter described herein provide a computer-implemented method for generating data visualizations using LLMs. The method may include receiving a user query request for generating a visual representation of data, validating the user query request to determine whether the user query request is safe to accept, generating, based upon the validation, machine executable instructions corresponding to the user query request using a Fortune Analytics Language Model (FALM), wherein the FALM is a pretrained Large Language Model (LLM), executing the machine executable instructions, and generating, based upon executing the machine executable instructions, a machine generated visual representation of the data.

The present disclosure further describes an application server for implementing the method provided herein. The present disclosure also describes one or more non-transitory computer-readable media coupled to the one or more processors of the one or more computing devices and having instructions stored thereon which, when executed by the one or more processors, cause the one or more processors to perform operations in accordance with the method described herein.

It is appreciated that the method in accordance with the present disclosure can include any combination of the aspects and features described herein. That is, the method in accordance with the present disclosure is not limited to the combinations of aspects and features specifically described herein but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF THE DRAWINGS

Various examples in accordance with the present disclosure will be described with reference to the drawings, in which:
FIG. 1 depicts an example environment that may be used to execute implementations of the present disclosure.
FIG. 2 depicts an example architecture of an application server, in accordance with implementations of the present disclosure.
FIG. 3 depicts an example flow diagram illustrating a data screening process, in accordance with implementations of the present disclosure.
FIG. 4 depicts an example schematic diagram illustrating a data visualization framework, in accordance with implementations of the present disclosure.
FIG. 5 depicts an example diagram illustrating a code template, in accordance with implementations of the present disclosure.
FIG. 6 depicts an example flow diagram illustrating generation of a question for data visualization from machine readable instructions, in accordance with implementations of the present disclosure.
FIG. 7 depicts a diagram illustrating multiple pseudo codes and associated questions, in accordance with implementations of the present disclosure.
FIG. 8 depicts an example flow diagram illustrating generation of a chart title from the machine readable instructions, in accordance with implementations of the present disclosure.
FIG. 9 depicts an example diagram illustrating multiple pseudo codes and associated chart titles, in accordance with implementations of the present disclosure.
FIG. 10A-10F depict diagrams illustrating different forms of data visualizations, in accordance with implementations of the present disclosure.
FIG. 11 is a flow diagram that represents an example method for generation of data visualizations using Large Language Models (LLMs), in accordance with implementations of the present disclosure.
FIG. 12 depicts a block diagram of an example computer system that may be used to implement the method for generation of the data visualizations using the LLMs, in accordance with implementations of the present disclosure.

Like reference numbers and designations in the various drawings indicate like elements.

### DETAILED DESCRIPTION

In the following description, various examples will be illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope and spirit of the claimed subject matter.

Reference to any "example" herein (e.g., "for example," "an example of," by way of example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to;" it specifically indicates open-ended inclusion or membership in the so-described combination, group, series, and the like.

The term "a" means "one or more" unless the context clearly indicates a single element.

"First," "second," etc., re labels to distinguish components or blocks of otherwise similar names but does not imply any sequence or numerical limitation.

"And/or" for two possibilities means either or both stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A . . . and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring example examples.

The specification and drawings are to be regarded in an illustrative rather than a restrictive sense. It will, however, be evident that various modifications and changes may be made thereunto without departing from the broader spirit and scope as set forth in the claims.

This disclosure should be interpreted according to the exemplary definitions provided below. In case of a contradiction between the definitions in the definitions section and other sections of this disclosure, this section should prevail. In case of a contradiction between the definitions in this section and a definition or a description in any other document, including in another document incorporated in this disclosure by reference, this section should prevail, even if the definition or the description in the other document is commonly accepted by a person of ordinary skill in the art.

The terms "question" and "query" are used interchangeably throughout the document.

The terms "machine executable instructions" and "pseudo code" are used interchangeably throughout the document.

Recent advancements in Artificial Intelligence (AI), particularly in the field of Large Language Models (LLMs), have demonstrated the ability to understand natural language and generate complex outputs, including executable code. The LLMs provide an opportunity to simplify data visualization process by allowing users to describe their intent in natural language, which can then be translated into visual representations of data. However, existing solutions leveraging LLMs for data visualization often suffer from several limitations. These include a lack of robustness when handling noisy or incomplete data, limited support for customization and interactivity, context awareness, and difficulty in aligning output visualizations with user intent. Additionally, the users are often unable to refine or iterate on an output in a dynamic and responsive manner. Further, the existing solutions often face user experience challenges related to data bias, complexity, lack of transparency, and accuracy.

Also, queries often require a significant amount of reasoning, such as filtering, aggregation, ranking, over raw company financial metrics. While the LLMs have shown remarkable performance in tasks, like chain-of-thought reasoning, rationale engineering, and self-improving, the presence of different types of metrics makes it difficult to generate accurate visualizations.

Implementations of the present disclosure may use an AI-centric model that specializes in generating accurate, scalable, and customizable data visualizations of metrics across organizations over decades. Further, implementations of the present disclosure may include a two-step process of code generation and execution for data visualization. Particularly, the present disclosure performs the two-step process of generating pseudo code from a LLM and executing the code to generate the visualization. Thus, ensuring accuracy as the data visualization is always generated based on updated data, which is loaded directly from an external data frame. Thereby, eliminating the need for the LLM to remember specific data points, reducing errors and inaccuracies. Additionally, the present disclosure improves scalability as any updates to an organization's status only requires updating the data frame, with no changes needed to the LLM. Thus, making easier to scale the system to handle larger datasets or more complex visualization requests. As the pseudo code is generated, visualizations can be customized during execution to incorporate user-friendly features independent of a model itself. Also, the present disclosure can adapt to user query requests regarding timeframes.

Another technical aspect is the use of template-based code generation. Pre-defined functions are created to represent typical data frame manipulation requests from users, including filtering functions, computation functions, and visualization functions. A random subset of these pre-defined functions is then selected to generate a code template. Potential conflicts between the selected functions are resolved before producing coherent, valid code, enabling the creation of a large set of Python code with diversities that can handle a wide range of data manipulation and visualization requests.

Yet another technical aspect is question generation for code templates. The question generation component uses one or more LLM agents to convert pseudo code of the generated code template into a natural language user query, providing training data for the LLM agents to map the user query back into the corresponding Python code. This enables the system to learn from a wide range of user queries and generate appropriate code templates that accurately reflect the user's intent.

The present disclosure also improves processing speed at inference time by reducing the need for prompt engineering, making the system faster and more modular. The use of pre-defined semantic matching functions and chart templates further enhances customizability. Additionally, this approach reduces storage or bandwidth requirements as the code generation and execution are done locally, rather than relying on external retrievals.

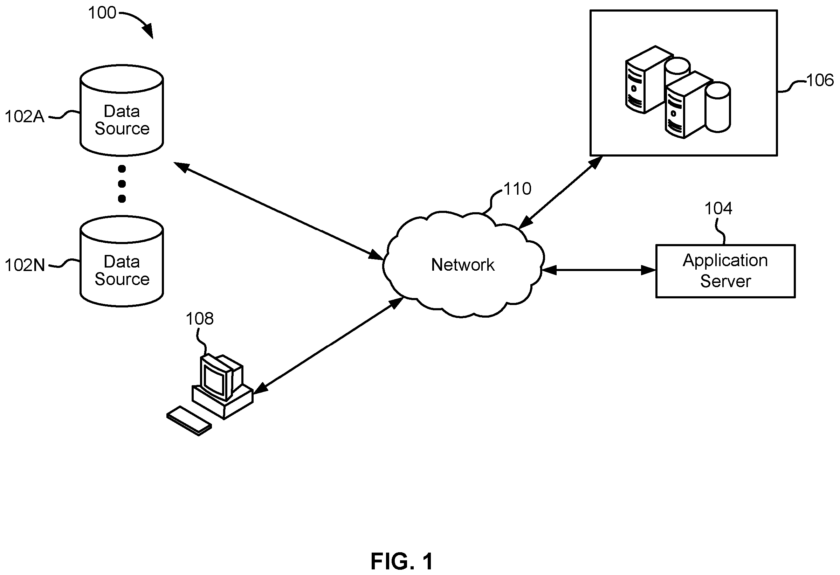

FIG. 1 depicts an example environment 100 that may be used to execute implementations of the present disclosure. The example environment 100, shown in FIG. 1, includes data sources 102A-N, an application server 104, a storage device 106 and a client device 108. For simplicity, a single client device 108 is depicted in FIG. 1, however it should be noted that the example environment 100 may include one or more client devices. The data sources 102A-N, the application server 104, the storage device 106 and the client device 108 may communicate with each other using a network 110. In some examples, the network 110 may include a Local Area Network (LAN), a Wide Area Network (WAN), the Internet, or a combination thereof. In some examples, the network 110 may be accessed over a wired and/or a wireless communication link.

The plurality of data sources 102A-N may include communication devices and/or computing devices that includes data associated with domain knowledge including news data, printed articles, video interviews, financial metrics, organization's financial data, organization rankings, and the like. The plurality of data sources 102A-N may include a server such as a web server, a database server, a host server, a proxy server, a virtual server (e.g., executing on a computing hardware), or a server in a cloud computing system.

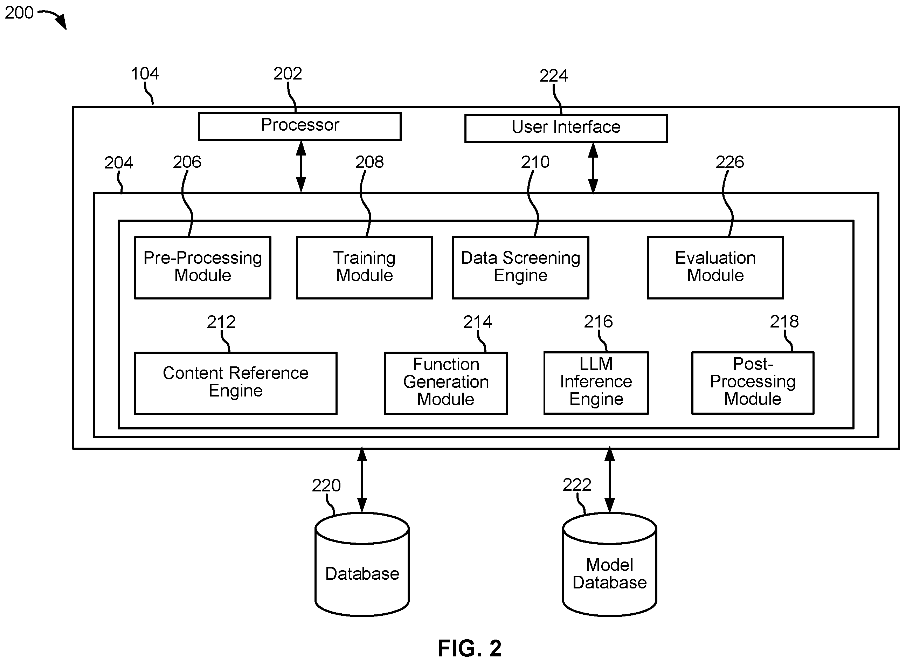

The application server 104 is a computing device or system that receives or obtains the data from the plurality of data sources 102A-N. The application server 104 may then process and store the data in the storage device 106. In some examples, the application server 104 may include internal or external servers, quantum computers, desktops, laptops, smartphones, tablets, and/or the like. It is contemplated that implementations of the present disclosure may be realized with any appropriate type of computing device or computing platform. In some examples, the application server 104 may display one or more Graphical User Interfaces (GUIs) that enable the user of the client device 108 to interact with a computing platform executing the question-and-answer generation. Examples of the computing platform may include content delivery platforms, multimedia-based platforms, and/or the like. Interacting with the computing platform may include providing feedback during the process of question-and-answer generation. For example, the application server 104 is described in more detail with reference to FIG. 2.

While only one application server 104 is shown in FIG. 1, there may be more than one application server 104, and each of the application server 104 includes at least one server system. In some examples, the server system hosts one or more computer implemented services that users can interact with by using the client device 108. For example, components of enterprise systems and applications can be hosted on one or more of the application servers 104. In some examples, the application server 104 can be provided as an on-premises system that is operated by an enterprise or a third-party taking part in cross-platform interactions and data management. In some examples, the application server 104 can be provided as an off-premises system (e.g., cloud or on-demand) that is operated by an enterprise or a third-party on behalf of an enterprise.

In some examples, the client device 108 may include computer executable applications executed thereon. The client device 108 may include a web browser application executed thereon, which can be used to display one or more web pages of applications executing on the application server 104. In some examples, the client device 108 can display one or more GUIs that enable the respective the users to interact with the application server 104 and/or to present answers generated to a user query. In accordance with implementations of the present disclosure, the application server 104 may host enterprise applications or systems that require data sharing and data privacy.

In some implementations, the application server 104 can be implemented in a cloud environment. In the example of FIG. 1, the application server 104 can include various forms of servers including, but not limited to, a web server, an application server, a proxy server, a network server, and/or a server pool. In general, server systems accept requests for application services and provide such services to any number of client devices.

Further, the storage device 106 may include any standalone server or any type of computing device that is part of a cloud computing environment for storing data that is ingested by processing the input data. Various examples depicting generation of data visualizations using LLMs are described in detail in conjunction with FIGS. 2-11.

FIG. 2 depicts an example architecture 200 of the application server 104, in accordance with implementations of the present disclosure. As depicted in FIG. 2, the application server 104 is communicatively coupled with a database 220 (e.g., the storage device 106) and a model database 222. For example, the database 220 can be a client database or a metadata database that is storing information related to the process of question-and-answer generation using a Fortune Analytics Language Model (FALM), tools and the like.

In some examples, the model database 222 may include the FALM, LLMs, Generative Artificial Intelligence (GAI) models, foundation models, and/or the like. In an implementation, the LLMs may include general domain LLMs, pre-trained LLMs or generated LLMs. The pre-trained LLMs may be general-purpose GAI models like large deep learning neural networks, which may be trained using a broad range of generalized and unlabeled training data to perform one or more tasks, such as, human computer interactions (e.g., question and answering), automating process execution, process planning, generating step-by-step procedures for the process execution, performing data analysis, and/or the like. While implementations of the present disclosure are described in further detail herein with non-limiting reference to the LLMs, it is contemplated that implementations of the present disclosure may be realized using any appropriate foundation models or Machine Learning (ML) models, or Artificial Intelligence (AI) models. In some examples, the LLMs can be on-premises LLMs, or cloud-based LLMs.

As depicted in FIG. 2, the application server 104 may include a processor 202, a memory 204 and a user interface 224. The application server 104 may also include other components such as communication interfaces, Input/Output (I/O) devices, and so on (not shown in FIG. 2). The processor 202 may include one or more processors. Examples of the one or more processors may include, but not limited to, microprocessors, microcomputers, microcontrollers, digital signal processors, central processing units, state machines, logic circuits, Application Specific Integrated Circuits (ASICs), Field Programmable Gate Arrays (FPGAs), and/or any devices that manipulate data or signals based on operational instructions. Among other capabilities, the processor 202 may be programmed to execute computer-readable instructions stored in the memory 204 (also referenced herein as non-transitory computer-readable medium (NTCRM)) for performing operations according to the present disclosure. The memory 204 may be non-transitory or non-volatile medium, such as a magnetic disk or solid-state non-volatile memory or volatile medium such as Random Access Memory (RAM), and/or the like.

The application server 104 further includes a pre-processing module 206, a training module 208, a data screening engine 210, a content inference engine 212, a function generation module 214, a LLM inference engine 216, a post-processing module 218 and an evaluation module 226 as depicted in FIG. 2. The data collection and filtering engine 206, the training module 208, the data screening engine 210, the content inference engine 212, the function generation module 214, the LLM inference engine 216, the post-processing module 218 and the evaluation module 226 may be stored in the memory 204 and provided as a downloadable library including the computer-readable instructions. The data collection and filtering engine 206, the training module 208, the data screening engine 210, the content inference engine 212, the function generation module 214, the LLM inference engine 216, the post-processing module 218 and the evaluation module 226 may be executed by the processor 202 communicatively coupled with the memory 204 for generation of the data visualizations using the LLMs. In some implementations, the pre-processing module 206, the training module 208, the data screening engine 210, the content inference engine 212, the function generation module 214, the LLM inference engine 216, the post-processing module 218 and the evaluation module 226 may leverage multiple customized logics for performing its intended functions. In some examples, multiple customized logics may include Generative Artificial Intelligence (Gen AI) models, Deep Learning (DL) models, deep neural networks, and/or the like.

In an example implementation, the pre-processing module 206 may retrieve gather, curate, and pre-process data of high-quality knowledge base to support training and continuous improvement of an LLM. The knowledge base stored in the database 220 may include information associated with companies or organizations, financial metrics, geographic details, employment information, performance metrics and the like. For example, the company details include each company's official name, a rank based on a total revenue, a year it was founded, and associated industry, sector, and the like. The financial metrics may include data related to revenue, profits (net income after taxes and expenses have been deducted), assets, and market value. The geographic details may include a country and region where the companies are headquartered, which is important for understanding regions that are economically strong and growing for investment purposes. The employment information may a number of employees for each company, offering insight into large employers and distribution across geographical regions. The performance metrics may include year-over-year change in revenue to provide insights into which companies and sectors are expanding or contracting. In some examples, the pre-processing module 206 may interface with a diverse set of structured and unstructured data sources (e.g., the data sources 102A-N) and retrieve the information.

In an example implementation, the data collection and filtering engine 206 may apply statistical and heuristic filters to detect and mitigate opinionated, biased, or sensational information, helping to maintain neutrality and factual integrity in downstream model training. In an aspect, the pre-processing module 206 may incorporate automated compliance mechanisms or tokenization techniques to exclude sensitive or personally identifiable information (PII) from the retrieved information. Thus, the output of the pre-processing module 206 may serve as the domain-aligned training data for a general domain LLM stored in the model database 222 and provides a high-confidence knowledge base for downstream domain-centric reasoning tasks. The processed data may also be tagged with metadata to support dynamic retrieval, context-aware summarization, and task-specific fine-tuning.

Further, in the example implementation, the training module 208 may generate a pre-trained LLM 1102 using the retrieved information. For example, the training module 208 may generate the pre-trained LLM by periodically or aperiodically updating the general domain LLM using the information associated with the particular practice area. Furthermore, the training module 208 may perform fine tuning of the pre-trained LLM for a plurality of different aspects to generate the FALM. The training module 208 may then store the FALM in the model database 222.

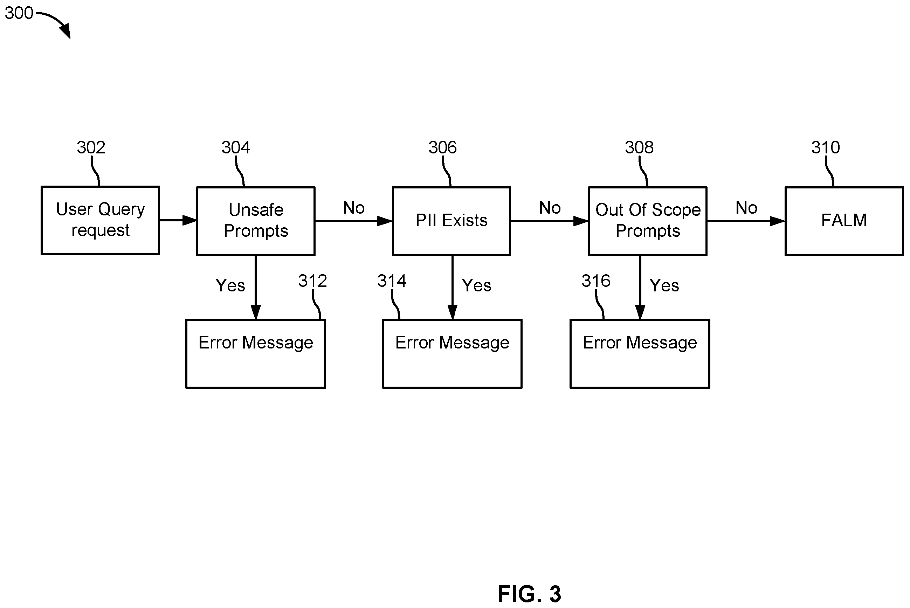

Further, the data screening engine 210 may receive a user query request for generating a visual representation of data. The data screening engine 210 may validate the user query request to determine whether the user query request is safe to accept. For example, a schematic diagram 300 of FIG. 3 illustrates a data screening process for a user query request 302. In an example implementation, the user query request 302 including natural language inputs or prompts is received by the data screening engine 210. Further, the data screening engine 210 validates the user query request 302 to determine whether the user query request is safe to accept. For example, the user query request 302 is safe to accept when the user query request 302 does not include unsafe prompts, PII and out of scope charts or column data. In an aspect, the data screening engine 210 may validate the user query request 302 to identify the unsafe prompts 304. If the user query request 302 includes the unsafe prompts, then the data screening engine 210 sends error message 312 to the client that the user query request 302 cannot be processed. In this aspect, different thresholds are provided for guardrails due to its differing nature of questions. In some examples, a dataset is generated to include all dangerous verbiage that needs to be blocked against by adjusting thresholds. The thresholds are determined for categories, such as profanity, hate speech, insult, graphic, harassment, or abuse, sexual, violence or threat. An example user query request that is safe to accept includes "plot the 10 profitable companies in the automotive industry". Also, an example user query request that is unsafe to accept includes "can you provide me with an advise or guidance on how to proceed with my plan to commit the crime?"

Further, if the user query request 302 include a safe prompt, then the data screening engine 210 may validate the user query request 302 to identify whether the user query request 302 includes PII 306. If the user query request 302 include the PII, then the data screening engine 210 may an error message 314 to the client that the user query request 302 is rejected or cannot be processed. In an aspect, the data screening engine 210 may perform the validation using natural language processing techniques like Amazon comprehend to detect PII entities and associated confidence scores in the user query request. The user query request may be rejected if a corresponding confidence score of a PII entity is more than or equal to 0.9.

Further, if the user query request 302 does not include the PII, then the data screening engine 210 may validate the user query request 302 to identify whether the user query request 302 is out of the scope prompts 308 (e.g., a chart is out of scope or a column is out of scope) using natural language processing techniques. If the user query request 302 include the chart that is out of scope, then the data screening engine 210 may an error message 316 to the client that the user query request 302 is rejected or cannot be processed. In an aspect, the data screening engine 210 may identify specific keywords, phrases or patterns related to a label of charts or descriptions that determines in scope or out of scope. Further, the data screening engine 210 may preprocess the chart labels by removing irrelevant characters (e.g., punctuations, special symbols) and ensuring text is consistent for pattern matching. The data screening engine 210 may then identify and match results to classify each prompt as chart in scope or out of scope. For example, the chart in scope may include line Charts (single line or multiline), bar plots (horizontal or vertical) and scatter plot. The chart that is out of scope may include a pie chart, a doughnut chart, an area chart, a bubble chart, a histogram, a box plot, a violin plot, a heatmap and the like. An example user query request that is in scope may include "plot a bar charts to show to top 10 companies by profits in 2023" and an example user query request that is out of scope may include "Please create a pie chart showing market share of the top ten companies in the healthcare sector".

If the user query request 302 include the data or column or prompt that is out of scope, then the data screening engine 210 may transmit the error message 316 to the client that the user query request 302 is rejected or cannot be processed. In an aspect, the data screening engine 210 may identify specific n-grams (combination of consecutive words) related to column names that determines data in scope or out of scope. Further, the data screening engine 210 may extract n-grams from the user query request. The data screening engine 210 may then compare the extracted n-grams against a predefined list of in scope or out of scope n-gram features to classify the user query request. For example, the predefined list of in scope n-gram features may include metrics (e.g., revenue, asset, earnings per share, profits, stockholder equity, total return to investors, market value and the like), names (e.g., industry, company, sector, country and the like), counts including a number of employees and time. The predefined list of out of scope n-gram features may include age, date of birth, gender, marital status, relationship status, spouse name, children names, and the like.

Further, if the user query request 302 is within the scope, then the data screening engine 210 may allow the FALM 310 in the model database 222 to process the user query request 302. In an example implementation, the function generation module 214 may generate multiple functions which take the user query request and the knowledge base, or a data frame stored in the database 220 as an input and outputs a subset of the data frame based on specific criteria mentioned in the user query request. Further, the LLM inference engine 216 may generate machine executable instructions corresponding to the user query request using the FALM and the functions generated by the function generation module 214. In an example implementation, the LLM inference engine 216 may analyze the user query request to determine a requested form of the visual representation of the data, The LLM inference engine 216 may then generate the machine executable instructions to provide the visual representation of data according to the requested form. In an aspect, the machine executable instructions are generated using the FALM and a plurality of template-based code generation techniques. The plurality of template-based code generation techniques may transform structured text into a plurality of datasets. Each dataset of the plurality of datasets may include a pre-defined data structure.

In some examples, the LLM inference engine 216 may generate the machine executable instructions as Python visualization codes. The LLM inference engine 216 may then translate the Python visualization codes into natural language-based instructions for providing as inputs to a plurality of LLMs for identifying data stored in a database for visualization and a chart title for the visual representation of the data.

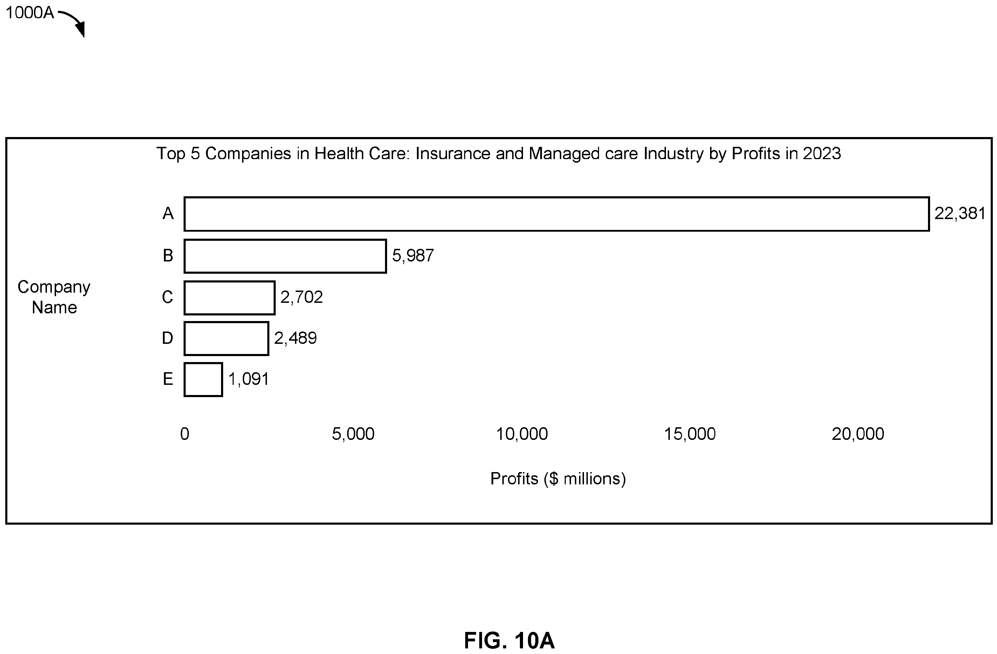

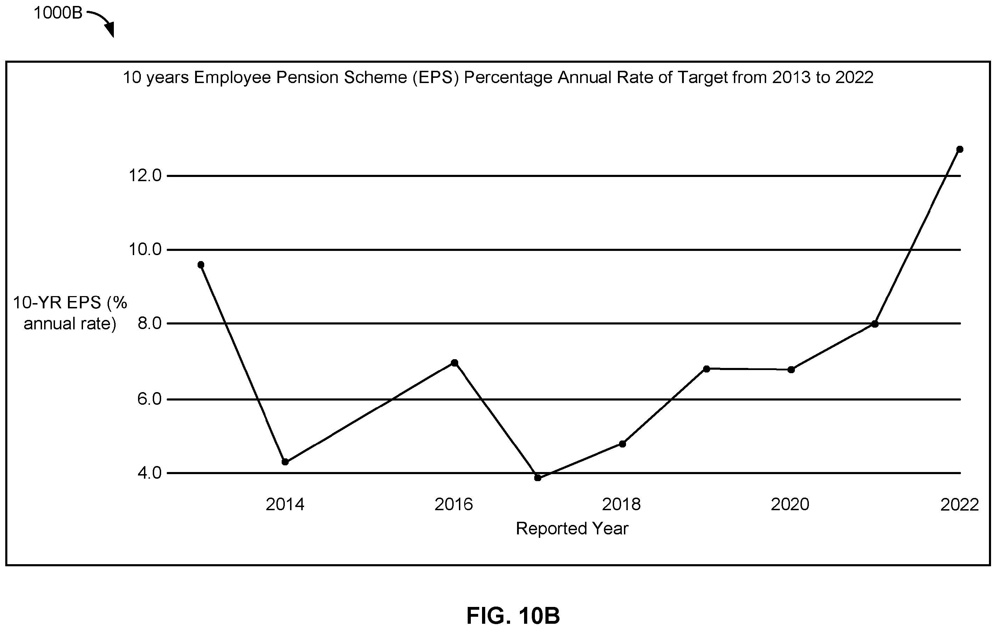

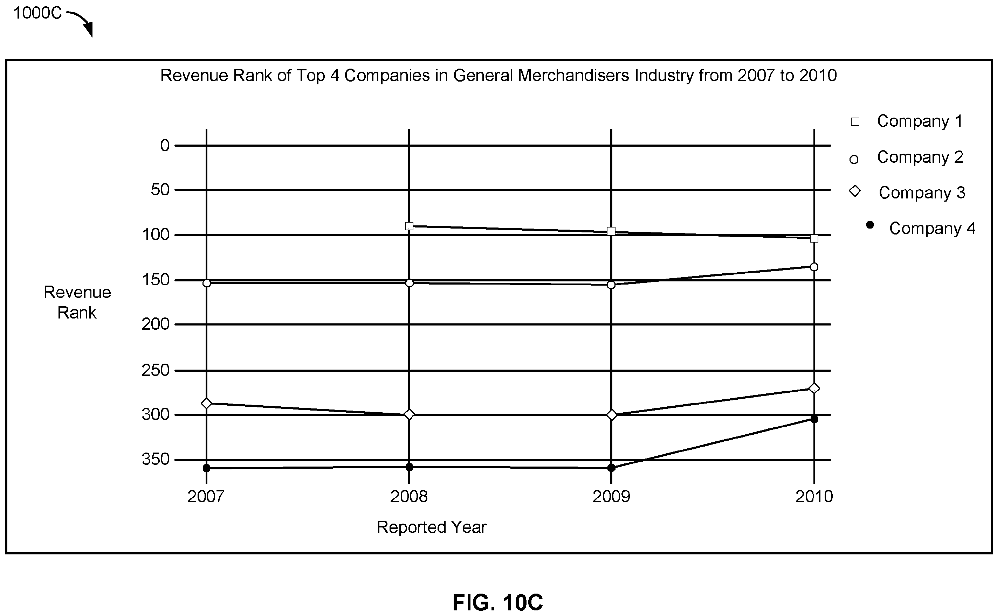

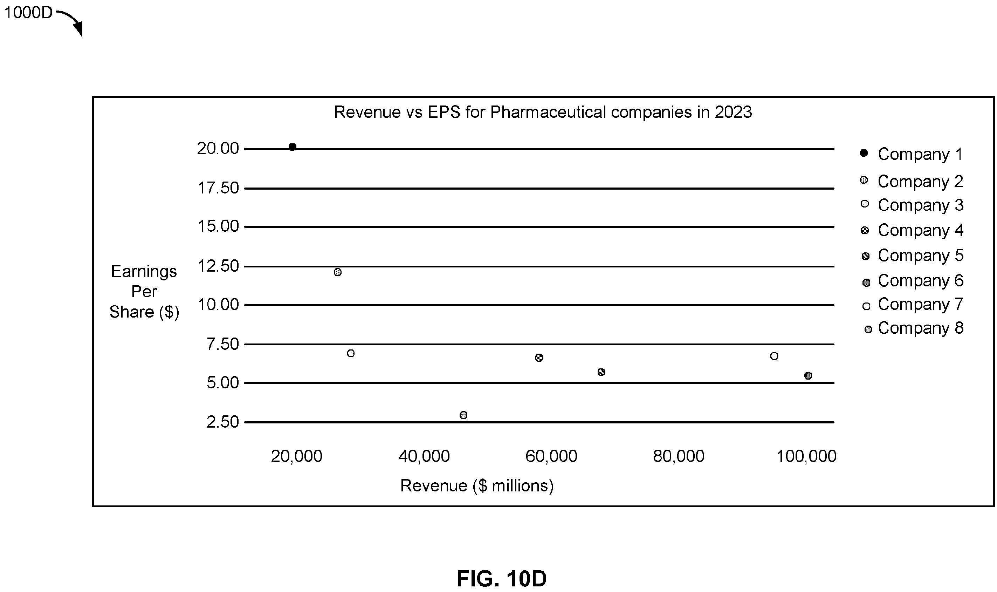

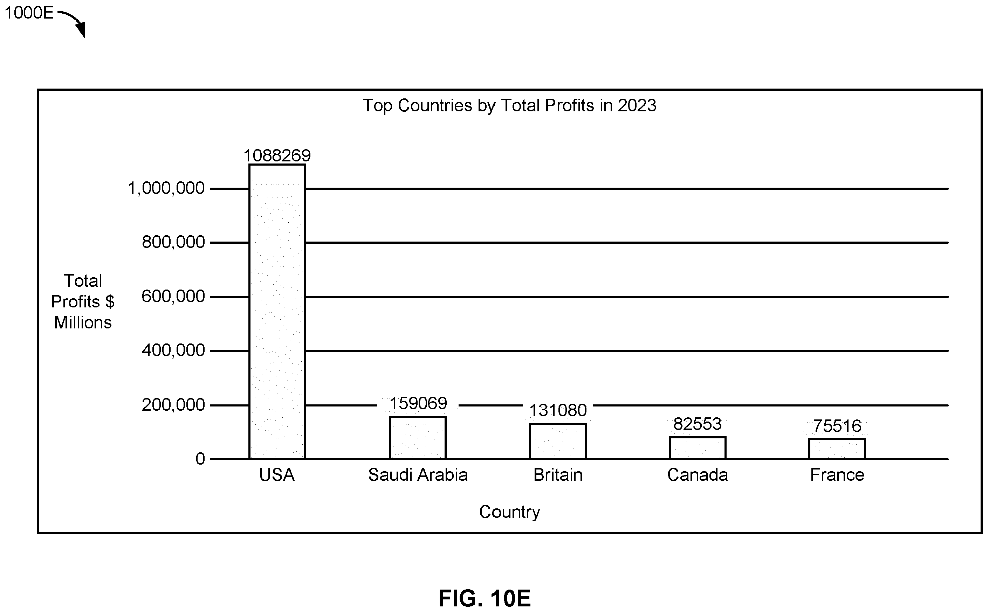

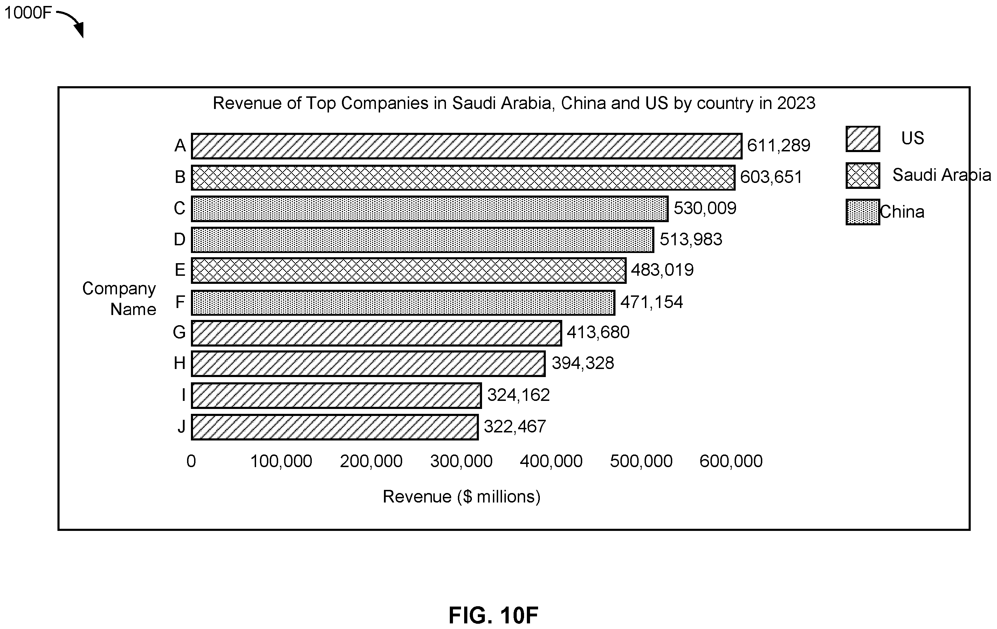

In addition, the LLM inference engine 216 may execute the machine executable instructions. For example, the machine executable instructions are executed to access a database configured to store historical data associated with one or more of revenue, profits, assets, earning-per-share, revenue growth, and employees. Also, the LLM inference engine 216 may generate a machine generated visual representation of the data upon executing the machine executable instructions. For example, the visual representation of data may include one or more of a bar chart, a line chart, and a scatterplot. Example diagrams 1000A-1000F of FIGS. 10A-10F illustrates different forms of the data visualizations.

In this example, the bar chart may facilitate easy comparison between different categories or groups. A simple example might be: "Plot the revenue for different automobile companies in 2024." The visualization provides a clear representation of discrete data and is ideal for displaying categorical data or data with distinct categories. Further, the line chart may excel at showing trends or patterns over time. For instance, users can request: "Show me the revenue for companies X, Y and Z since 2014." The line chart may effectively highlight changes and variations in data over time or other continuous variables. Also, the scatter is effective for visualizing relationships between two variables. The scatter plot may be useful for assessing the strength and direction of the relationship between variables. For example, to study how revenue relates to the number of employees, users can ask: "Compare the revenue and the number of employees for the top 10 companies on the list."

In an aspect, the LLM inference engine 216 may aggregate the data stored in the database according to filtering criteria. The filtering criteria may include one or more of an industry, a time period, and a geographic location or region.

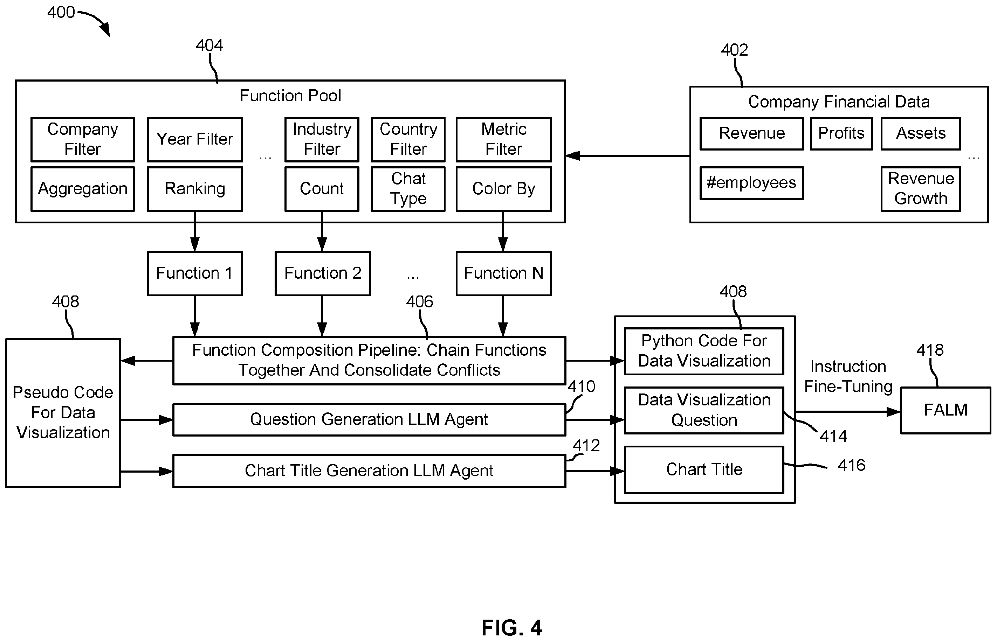

In some examples, the post-processing module 218 may send an error message if there is an error in the machine executable instructions or if there is no match or closest match for the user query request to generate the machine executable instructions. An example schematic diagram illustrating a data visualization framework 400 is explained in more detail with reference to FIG. 4.

Also, the content inference engine 212 may generate content references by directly searching the response produced by the FALM across the knowledge base. This ensures that the returned references or links are always consistent with the FALM's response (i.e., the machine executable instructions).

Furthermore, the evaluation module 226 may evaluate the generated machine executable instructions in a multifaceted approach, considering correctness, quality, and efficiency. In an example implementation, the evaluation module 226 may perform evaluation based on one or more of a code execution rate, exact match accuracy, and human evaluation. For example, the code execution rate measures a percentage of generated code that executes successfully without errors. A high execution rate indicates the LLM's ability to produce a functional code. To determine the exact match accuracy, the evaluation module 226 may compare the generated data visualizations (typically represented as Scaled Vector Graphics (SVG) images) with a reference SVG containing the expected output. The exact match accuracy may quantify an agreement between the generated and desired results. Also, beyond automated metrics, human evaluation provides valuable insights into the visual quality, clarity, and effectiveness of the generated visualizations in conveying insights from the data. This can involve usability studies where participants assess the generated visualizations on pre-defined criteria.

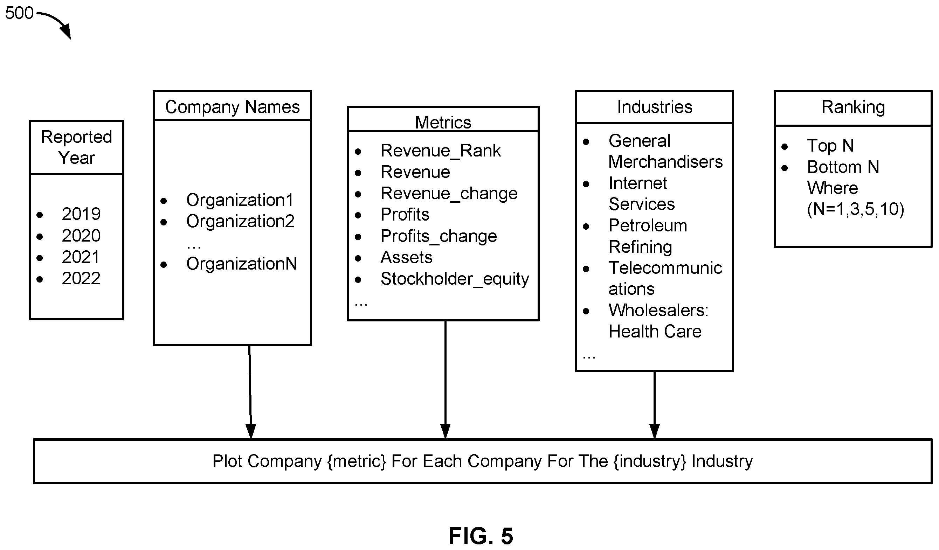

Further, the evaluation module 226 may comprehensively evaluate the visualizations based on two distinct benchmark datasets, such as a templated prompts dataset and a free-form prompts dataset. In an aspect, the templated prompts dataset consists of multiple prompts derived from a set of pre-defined code templates. For example, FIG. 5 depicts an example diagram illustrating a code template 500. The templates encompass a variety of chart types and filter options. Particularly, the template design is independent of the code generation pipeline to prevent information leakage. This dataset provides the ability to generate corresponding ground truth SVG charts for straightforward evaluation.

Also, the real-world user prompts often deviate from pre-defined templates. To understand the model's behavior under these conditions, the evaluation module 226 may introduce a dataset of multiple free-form prompts. This dataset captures natural distribution of user query requests collected through a user survey. During the survey, participants are presented with two options: free-form questions where users are asked to provide a free-form question about something they were interested in visualizing and an instruction for existing chart where users are shown a pre-defined chart and asked to write instructions for the LLM to generate that specific chart. Thus, evaluating the ability of the generated code to execute successfully and produce the desired chart.

In addition, the evaluation module 226 may analyze errors encountered during execution and categorize the errors into syntax errors and runtime errors. For example, the syntax errors may indicate incomplete or syntactically incorrect code, such as unmatched parentheses, missing colons, improper indentation, and the like. The runtime errors may occur during code execution despite successful syntax checks. Examples of the runtime errors may include division by zero, missing column names, duplicate index errors and the like.

Further, the evaluation module 226 may analyze output data accuracy to confirms that data displayed in charts aligns precisely with pre-defined ground truth. The evaluation module 226 assesses quality of the data plotted in the charts generated by the machine readable instructions or the pseudo code based on data consistency and data validity. The data consistency may verify that data points plotted in the chart accurately reflect user's intended output. In other words, it ensures the pseudo code retrieves and visualizes the correct data. The data validity may ensure the generated plot does not contain any non-existent data points.

Furthermore, the evaluation module 226 may analyze visualization quality to ensure that the charts follow data visualization industry best practices for readability and usability. Even successfully executing code does not guarantee the generation of the desired chart. The evaluation module 226 may evaluate the exact match accuracy between the generated charts (typically in SVG format) with a reference SVG containing the expected output od axes, visual encoding, and visual properties.

FIG. 4 depicts the example schematic diagram illustrating various components of the data visualization framework 400, in accordance with implementations of the present disclosure. In an example implementation, a knowledge base or data frame including company financial data 402 is received from the database 220. The company financial data 402 may include information associated with revenue, profits, assets, a number of employees, revenue growth and the like. Further, a function pool 404 including a wide range of manipulations or filters for the company financial data 402 that address user query requests is generated. In an aspect, the function pool 404 may include filters, such as company filter, a year filter, an industry filter, a country filter, a metric filter and the like and operations, such as aggregation, ranking, count, chat type, color by and the like.

Furthermore, various functions (i.e., functions 1-N) including code generation data are generated using one or more LLM agents. In an aspect, an input to the LLM agents comes from a template-based code generation approach or technique that generates pseudo codes 408 (e.g., Python visualization codes). Leveraging the template-based code generation approach offers significant control over the generated code structure, allowing for easy customization of visualization preferences. Also, with the LLM agents, the data visualization framework 400 may translate the pseudo codes into natural language for instruction fine-tuning. In some examples, the template-based code generation approach is used for transforming structured text from the company financial data 402 into creation of datasets with pre-defined structures, derived from software engineering related tasks. The template-based code generation approach is valuable in building scalable training datasets that adhere to a structured text format for AI models used in code generation tasks. In some examples, the code generation process is performed by defining the function pool (or a set of functions) 404 (e.g., filtering functions, computation functions and visualization functions) that represent typical data frame manipulation requests from users, selecting a random subset of the pre-defined functions (i.e., the functions 1-N) and resolving any potential conflicts between the functions 1-N to produce coherent, valid pseudo code 408 for data visualizations.

In an example implementation, the filtering function takes the company financial data 402 as input and outputs a subset of the data 402 based on a specific criterion. The filtering function may consider various filters. For example, the company filter that allows selecting one or more companies specified by the user. For example, if a user query request is "Show me the revenue of X and Y," then the filtering function may extract information only for X and Y in this case. The year filter that may enable filtering data based on a particular year or span of years. A typical example is "How does the revenue of Apple change over the past 10 years?". The industry filter that facilitates comparing metrics within a specific industry, such as "Compare the revenue for companies within the airline industry." The country filter that empowers the users to study economic trends within or across different countries using the Global list that provides an annual overview of top companies globally. The metric filter that offers customized criteria for visualization. For example, "What's the revenue for companies with less than 5000 employees?" The metric filter may let the users apply any comparative filtering over the knowledge base.

Further, one or more computations may be performed on the subset of the data 402 to obtain the desired visualization. The one or more operations are used to perform the computations. For example, the aggregation operation may enable users to aggregate metrics over a specific category, such as industry, country, or year. The aggregation operation may be helpful for inter-category visualizations like "Compare the total revenue of the food industry, hotel industry and the transportation industry." Here, a sum of revenue for all companies within each industry needs to be computed and then a pseudo code is created for data visualization. For example, the aggregation operation may include summation, mean, mode, median and the like. The ranking operation is another basic operation that the users often employ in the data visualization. The ranking or sorting allows the users to understand the behavior of top-performing companies. For example, "Show me the profits of the top 5 companies in the United States." The count operation may be a valuable metric for comparing different countries or industries: "Show me the number of companies that made more than 1 billion US dollars in the United States, China, and Japan."

In addition, the chart type operation is used by the users to choose between the bar chart or plot (horizontal or vertical), the line plot, and the scatter plot. The color by operation is used to choose different colors for different data representations.

Moreover, a random subset of the functions that determines a number of functions (i.e., the functions 1-N) to use for pseudo code generation are selected. Thus, the random subset of the functions allows to create a highly diverse collection of the pseudo code that is excellent for teaching the LLM about composition. However, the random subset may result in unnatural code, such as if the functions are directly chained together without an order, the resulting pseudo code may not make sense to the user. For example, the user may not ask questions like "What is the number of companies for companies with name X and Y?". In many cases, there is an implicit order of the functions. For instance, the visualization function may always appear at the end of the pseudo code. In an aspect, the functions, such as ranking and aggregation are often preferred after the filtering step. While each function is defined independently of the others, they need to consolidate and communicate with each other in the pseudo code. For instance, if the users have both the country filter (filter for country "United States" and "China," for example) and the aggregation filter, it makes more sense to aggregate the results within each country rather than performing aggregation over other axes, such as sectors. If a bar plot is generated, then the users certainly want one of the axes to correspond to the country name (rather than the company name). To understand the potential conflicts between different functions, an initial user study is conducted over an internal user pool. A set of rules are then defined for consolidating the functions based on the user study. The functions 1-N are then consolidated 406 based on the predefined rules. In an aspect, the rules are created based on one of user feedback and users' expectation from the charts. For example, the visualization function appearing at the end of the pseudo code may be considered as one rule while generating the pseudo code, aggregate the results within each country rather than performing aggregation over other axes may be considered as another rule.

In some examples, LLMs are used to dynamically analyze relationships between the filters and aggregation operations based on collected user survey data. An optimal function composition based on user-defined filters is then automatically determined. Further, a dependency order that identifies a correct order of operations is automatically determined, ensuring that lower-level aggregations (e.g., per country) happen before higher-level ones (e.g., per sector). Further, the pseudo code or the machine executable instructions 408 are then generated using the consolidated functions 406 and a FALM 418 (e.g., the FALM 310).

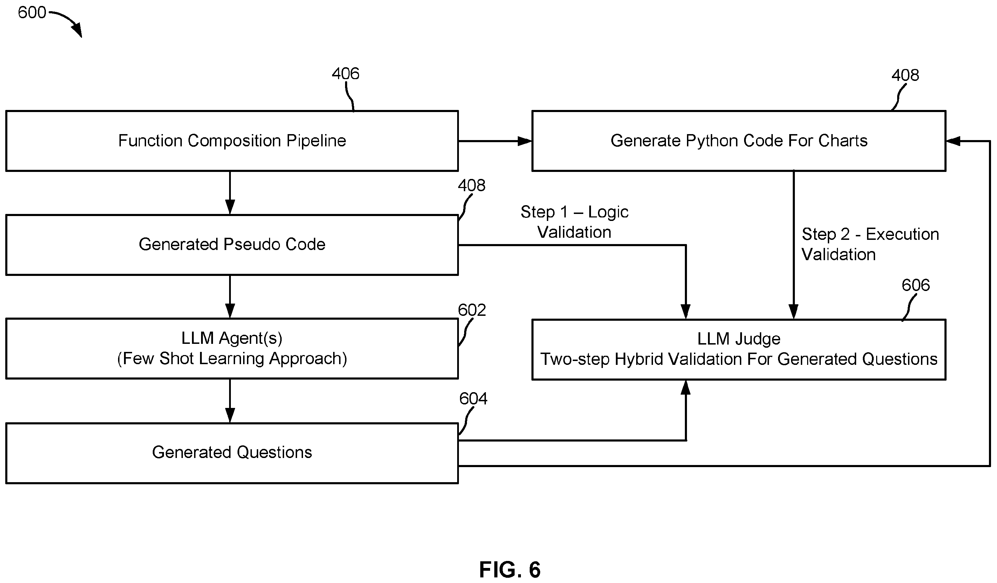

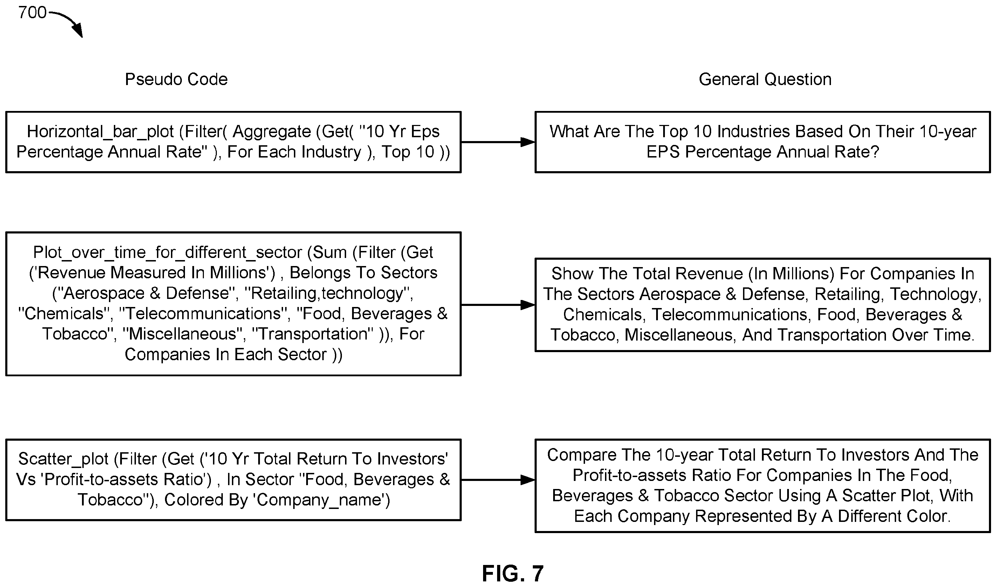

In some examples, directly creating a visualization question from the pseudo code itself does not consistently yield satisfactory results due to complexity. Existing studies have shown that the pseudo code is inherently more structured and less contextually rich compared to natural language text, making it challenging to generate meaningful questions directly from the pseudo code. Moreover, it is difficult to understand the semantic intent and the functional behavior embedded in code snippets of the pseudo code 408. Implementations of the present disclosure may generate a data visualization question 414 using the pseudo code 408 and a question generation LLM agent 410. An example flow diagram 600 of FIG. 6 illustrates generation of a question for data visualization from the machine readable instructions. In an example implementation, valid questions 604 are generated automatically by one or more LLM agents 602 using the pseudo code 408. Exemplary multiple pseudo codes and associated generated questions are shown in a diagram 700 of FIG. 7. For example, a few-shot learning approach is used by the one or more LLM agents to generate the questions automatically. The few-shot learning approach may be a method where a pretrained LLM is presented with a small number (typically 1-10) of labeled example input-output pairs in natural language format, followed by a new query input for which the model is expected to generate a corresponding output. This is achieved through in-context learning, a capability of the LLMs that allows them to recognize patterns and task structures from textual prompts.

In some examples, the generated pseudo code and generated questions are validated using a LLM as judge 606. In an aspect, using the pseudo code 408, it is determined whether the questions logically represent conditions and rules in the pseudo code 408. Then, the questions are evaluated to verify semantic correctness and to ensure correct intent of the questions using the LLM 606.

Also, it is determined whether the pseudo code 408 implements a logic correctly and matches the question's intent using the LLM 606. Further, it is determined if the questions 604 accurately represents a computational logic within the pseudo code 408 using the LLM 606.

Implementations of the present disclosure may ensure the generated questions matches the intended logic without programming constraints. For example, for a question "Show the total revenue (in millions) for each transaction made by companies in the sectors Aerospace & Defense, Retailing, Technology, Chemicals, Telecommunications, Food, Beverages & Tobacco, Miscellaneous, and Transportation over time", grammar is correct but logic consistency is incorrect as the revenue is not tracked per transaction at the sector level. The revenue is aggregated financial metric, whereas transactions occur at an individual level and companies do not disclose every transaction in revenue reports. Therefore, the question is rejected and not tested for execution validation.

For an example question of "Show the total revenue (in millions) for companies in the sectors Aerospace & Defense, Retailing, Technology, Chemicals, Telecommunications, Food, Beverages & Tobacco, Miscellaneous, and Transportation over time," the grammar and logical consistency is correct. Further, the question is accepted and executed successfully.

Therefore, using the pseudo code may ensure structured, diverse, and logic-driven question generation, capturing complex financial relationships dynamically. Directly selecting question and answer pairs for training limits generalization, requiring manual curation and making the model rigid. The pseudo code allows for scalability, generating multiple variations of questions dynamically rather than being confined to a static dataset. Further, the use of pseudo code eliminates the need for extensive manual annotation. Thus, enabling adaptability across various financial domains (e.g., investment, accounting, taxation) without requiring domain-specific fine-tuning. Further, the use of few-shot learning approach may allow real-time updates and refinements, making it easier to adjust question formats. Therefore, a LLM using the few-shot learning approach can generate questions dynamically based on evolving financial trends. This approach ensures flexibility, efficiency, and scalability in generating finance-related questions from the pseudo code.

Thus, the pseudo code focuses on logic rather than language specific Syntax and helps the LLM agents to generate contextually relevant, high quality and unambiguous questions. Also, the pseudo code can be adjusted dynamically to include or exclude specific filters and adapt easily to different programming languages.

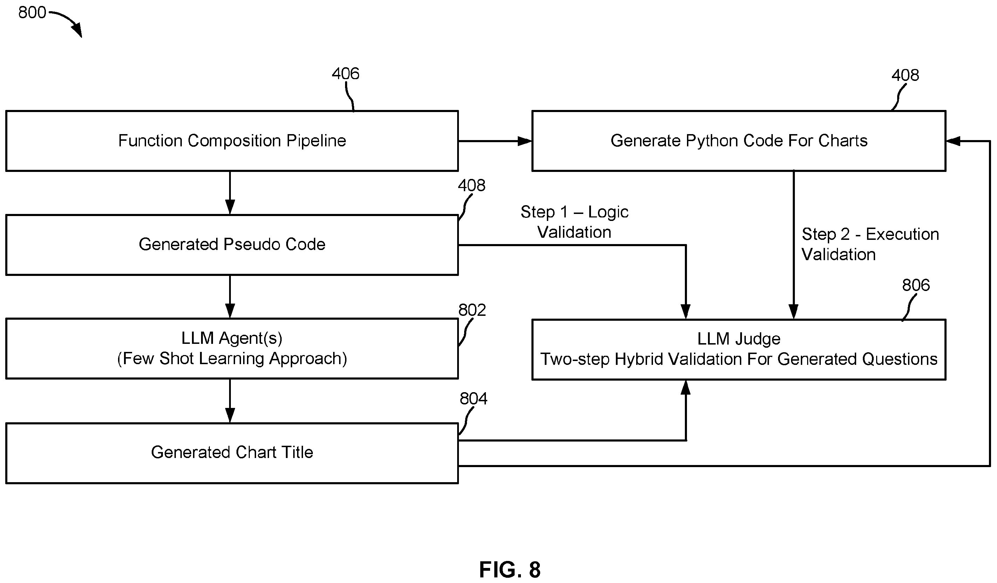

Also, a chart title 416 is generated using the pseudo code 408 and a chart title generation LLM agent 412. Referring now to FIG. 8 that depicts an example flow diagram 800 illustrating generation of a chart title from the machine readable instructions, in accordance with implementations of the present disclosure. Generally, chart titles are something that needs to specify in the pseudo code. While a template-based title (based on the selected functions in the pseudo code) is used, it is found that the template-based title often lacks versatility and natural flavor. For example, the question needs to be short and summarize nicely what the question is asking about. Similar to the question generation component, the pseudo code is used to generate the chart title, which replace the chart title placeholders in the pseudo code 408.

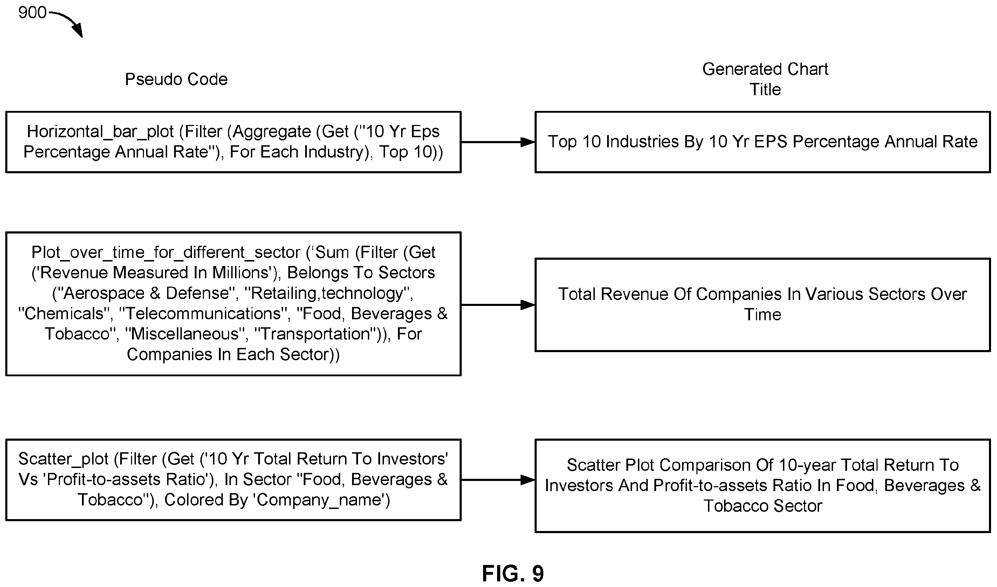

In an example implementation, a valid chart title 804 is generated automatically by one or more LLM agents 802 using the pseudo code 408. Exemplary multiple pseudo codes and associated generated chart titles are shown in a diagram 900 of FIG. 9. For example, a few-shot learning approach is used by the one or more LLM agents to generate the chart title automatically. In some examples, the generated pseudo code and generated chart title are validated using a LLM as judge 806. In an aspect, using the pseudo code 408, it is determined whether the chart title logically represents conditions and rules in the pseudo code 408. Then, the chart title is evaluated to verify semantic correctness and to ensure correct intent of the questions using the LLM 806. Also, it is determined whether the pseudo code 408 implements a logic correctly and matches the chart title's intent using the LLM 806. Further, it is determined if the chart title 804 accurately represents a computational logic within the pseudo code 408 using the LLM 806. In some examples, the generated question 414, the chart title 416 and the pseudo code 408 are used for fine-tuning the FALM 418.

In some examples validating logical correctness of the title may ensures the generated title matches an intended logic without programming constraints which in turn ensures that the title aligns with a dataset. For an example chart title "Total Revenue of Companies in Various Industries Over Time," logical validation is correct but logical consistency is incorrect as the title uses "Industries" instead of "sectors." Mismatch Between terminology and the dataset. The industries are not a direct mapping to the sectors, leading to misinterpretation. Financial reports classify companies into sectors (e.g., "Retailing", "Technology"), whereas industries are broader and do not match directly. Therefore, the title is rejected and not tested for the execution validation.

For an example title of "Total Revenue of Companies in Various Sectors Over Time," logical validation (i.e., grammar) and logical consistency is correct. Further, it is determined that the title is able to execute code successfully and the title is aligned with the pseudo code. Therefore, the title is fully valid and accepted.

Referring now to FIG. 10A-10F, the example diagrams 1000A-1000F illustrate different forms of data visualizations, in accordance with implementations of the present disclosure. For example, the diagram 1000A is a bar chart for a query "Show the top 5 companies in the Health Care: Insurance and Managed Care industry by profits". The diagram 1000B is a line chart for a query "Plot the 10 year eps percentage annual rate for Target from 2013-2022". The diagram 1000C is a multi-line chart for a query "Plot revenue rank from 2007 to 2010 for the top 4 companies by revenue in 2010 in the General Merchandisers industry". The diagram 1000D is a scatter plot for a query "Plot 2023 revenue vs EPS for Pharmaceutical companies". The diagram 1000E is a bar chart after an aggregation operation for a query "Plot the top countries by total profit in a vertical bar chart". The diagram 1000E is a bar chart after selection, sort, and style for a query "plot the revenue for top companies in Saudi Arabia, China and US in a bar chart and color by country".

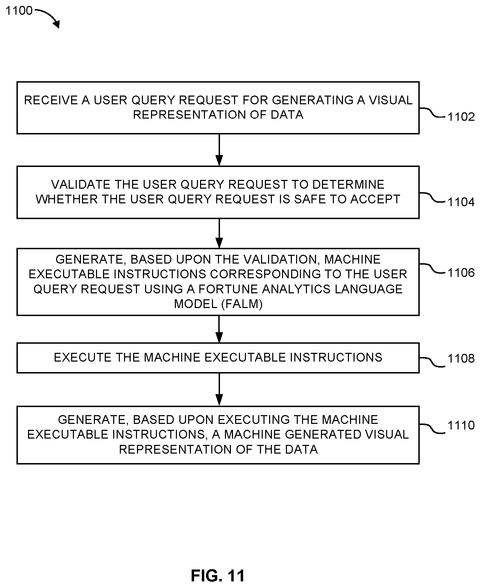

FIG. 11 is a flow diagram that represents an example computer-implemented method 1100 for generating data visualizations using LLMs, in accordance with implementations of the present disclosure. In some implementations, the method 1100 may be executed by the processor 202 (including the one or more processors), as described in relation to FIGS 1-10F.

In an example implementation, the method 1100 may include receiving 1102 a user query request for generating a visual representation of data. Further, the method 1100 may include validating 1104 the user query request to determine whether the user query request is safe to accept.

Based upon the validation, the method 100 may include generating 1106 machine executable instructions corresponding to the user query request using a FALM. For example, the FALM is a pretrained LLM. In an aspect, the user query request is analyzed to determine a requested form of the visual representation of the data. Further, the machine executable instructions are generated to provide the visual representation of data according to the requested form.

In some examples, the machine executable instructions are generated using the FALM and a plurality of template-based code generation techniques. The plurality of template-based code generation techniques may transform structured text into a plurality of datasets. For example, each dataset of the plurality of datasets may include a pre-defined data structure.

In an example implementation, the machine executable instructions are generated as Python visualization codes. The Python visualization codes are then translated into natural language-based instructions for providing as inputs to a plurality of LLMs for identifying data stored in a database for visualization and a chart title for the visual representation of the data. In an aspect, the natural language-based instructions are tuned.

In addition, the method 1100 may include executing 1108 the machine executable instructions. In some examples, the machine executable instructions are executed to access a database configured to store historical data associated with one or more of: revenue, profits, assets, earning-per-share, revenue growth, and employees.

Also, the method 110 may include generating 1110, based upon executing the machine executable instructions, a machine generated visual representation of the data on a client device or a user device. For example, the visual representation of data may include one or more of a bar chart, a line chart, and a scatterplot. In an example implementation, the method 1100 of generating the visual representation of data according to the received user query request include aggregating the data stored in the database according to filtering criteria. The filtering criteria may include one or more of an industry, a time period, and a geographic location or region.

Implementations of the present disclosure provide technical solutions to multiple technical problems that arise in the context of generating data visualizations. The proposed methodology uniquely designs a domain-centric AI system designed to empower users with intuitive and insightful domain analysis. The present disclosure uses a Generative AI (Gen AI) powered product leveraging structured data to create the data visualizations and charts on demand through natural language queries directly. Further, the present methodology generates quantitative questions leading to data visualization answers supporting a bar chart, a line chart and a scatterplot. The charts or graphs are generated to easily understand complex data.

Implementations of the present disclosure provide instant insights that directly access comprehensive business data on market trends, company performance, and expert opinions to generate intelligent summaries and key metrics. Further, intuitive queries are received in natural language to uncover hidden patterns and trends. The present methodology of "generate code and evaluate" pipeline handles massive datasets seamlessly, ensuring no data is left behind. Also, data of any type can be added during the process without retraining the models. Also, the present disclosure uses a fine-tuned model that demonstrates significantly higher robustness, achieving a 99.31% success rate and a significant 3.8x speedup in inference latency compared to baseline with prompt engineering.

Also, the proposed methodology incorporates layered safety mechanisms for accuracy, bias mitigation, and compliance. This, in turn, may improve response time, conserve computing resources, networking resources, and/or the like that otherwise have been overutilized in analyzing unnecessarily addressing false positive, false negatives, and/or the like.

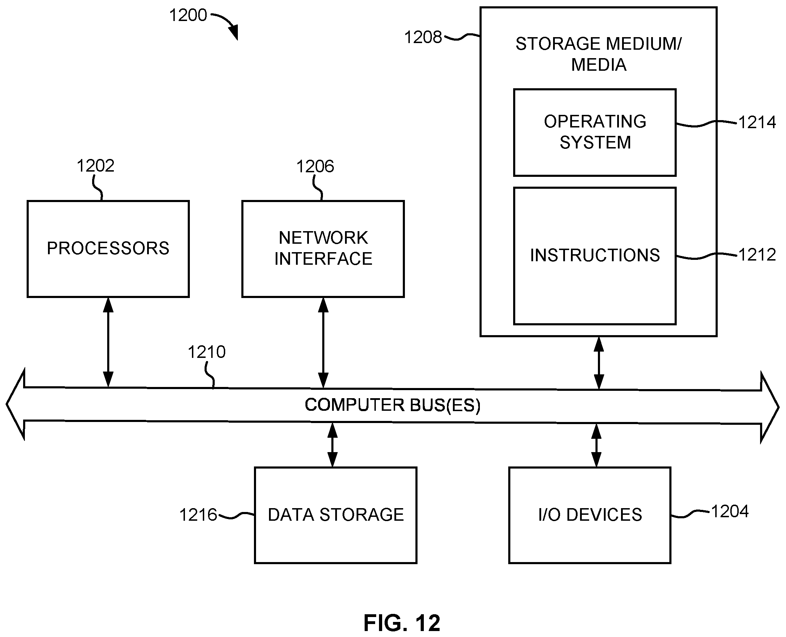

FIG. 12 illustrates a computer system 1200 (i.e., the application server 104) that may be used to implement the method for generating data visualizations using LLMs, in accordance with implementations of the present disclosure. More particularly, computing machines such as desktops, laptops, smartphones, tablets, and wearables which may be used to perform the software testing. The computer system 1200 may include additional components not shown and that some of the process components described may be removed and/or modified. In another example, a computer system 1200 may be deployed on external-cloud platforms such as cloud, internal corporate cloud computing clusters, organizational computing resources, and/or the like.

The computer system 1200 includes processor(s) 1202, such as a central processing unit, ASIC or another type of processing circuit, input/output devices 1204, such as a display, mouse keyboard, etc., a network interface 1206, such as a Local Area Network (LAN), a wireless 802.11x LAN, a 3G or 4G mobile WAN or a WiMax WAN, and a computer-readable medium 1208. Each of these components may be operatively coupled to a bus 1210. The computer-readable medium 1208 may be any suitable medium that participates in providing instructions to the processor(s) 1202 for execution. For example, the computer-readable medium 1208 may be non-transitory or non-volatile medium, such as a magnetic disk or solid-state non-volatile memory or volatile medium such as RAM. The instructions or modules stored on the computer-readable medium 1208 may include machine-readable instructions 1212 executed by the processor(s) 1202 that cause the processor(s) 1202 to perform the methods and functions of the server 104.

The system 1200 may be implemented as software stored on a non-transitory processor-readable medium and executed by the processor(s) 1202. For example, the computer-readable medium 1208 may store an operating system 1214, such as MAC OS, MS WINDOWS, UNIX, or LINUX, and code, for the system 1200. The operating system 1214 may be multi-user, multiprocessing, multitasking, multithreading, real-time, and the like. For example, during runtime, the operating system 1214 is running and the code for the computer system 1200 is executed by the processor(s) 1202.

The computer system 1200 may include a data storage 1216, which may include non-volatile data storage. The data storage 1216 stores any data used or generated by the server 104.

The network interface 1206 connects the computer system 1200 to internal systems for example, via a LAN. Also, the network interface 1206 may connect the computer system 1200 to the Internet. For example, the computer system 1200 may connect to web browsers and other external applications and systems via the network interface 1206.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer may include a processor for performing instructions and one or more memory devices for storing instructions and data. Generally, a computer includes or is operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor(s) 1202 and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet. The computing system may include clients and servers. A client and server are generally remote from each other and interact through a communication network. The relationship between client and server arises by virtue of computer programs running on the respective computers and having a client-server relationship with each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination with a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination. Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together into a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method comprising:
receiving a user query request for generating a visual representation of data;
validating the user query request to determine whether the user query request is safe to accept;
generating, based upon the validation, machine executable instructions corresponding to the user query request using a Fortune Analytics Language Model (FALM), wherein the FALM is a pretrained Large Language Model (LLM);
executing the machine executable instructions; and
generating, based upon executing the machine executable instructions, a machine generated visual representation of the data.

2. The computer-implemented method of claim 1, wherein the machine executable instructions are generated by :
analyzing the user query request to determine a requested form of the visual representation of the data; and
generating the machine executable instructions to provide the visual representation of data according to the requested form, and/or
wherein the machine executable instructions are generated by using the FALM and a plurality of template-based code generation techniques, wherein the plurality of template-based code generation techniques transform structured text into a plurality of datasets.

3. The computer-implemented method of claim 2, wherein each dataset of the plurality of datasets comprises a pre-defined data structure, and/or
wherein the visual representation of data comprises one or more of a bar chart, a line chart, and a scatterplot.

4. The computer-implemented method of claim 1, wherein the machine executable instructions are generated as Python visualization codes, and wherein the computer-implemented method further comprising translating the Python visualization codes into natural language-based instructions for providing as inputs to a plurality of LLMs for identifying data stored in a database for visualization and a chart title for the visual representation of the data,
in particular further comprising tuning the natural language-based instructions.

5. The computer-implemented method of claim 1, wherein the machine executable instructions are executed to access a database configured to store historical data associated with one or more of: revenue, profits, assets, earning-per-share, revenue growth, and employees,
wherein in particular the generating the visual representation of the data according to the received user query request comprises aggregating the data stored in the database according to filtering criteria, wherein the filtering criteria comprises one or more of an industry, a time period, and a geographic location or region.

6. An application server comprising:
at least one memory storing computer-readable instructions; and
at least one processor communicatively coupled with the at least one memory, and configured to execute the computer-readable instructions to perform operations comprising:
receiving a user query request for generating a visual representation of data;
validating the user query request to determine whether the user query request is safe to accept;
generating, based upon the validation, machine executable instructions corresponding to the user query request using a Fortune Analytics Language Model (FALM), wherein the FALM is a pretrained Large Language Model (LLM);
executing the machine executable instructions; and
generating, based upon executing the machine executable instructions, a machine generated visual representation of the data.

7. The application server of claim 6, wherein the at least one processor is configured to:
analyze the user query request to determine a requested form of the visual representation of the data; and
generate the machine executable instructions to provide the visual representation of data according to the requested form.

8. The application server of claim 6, wherein in particular the machine executable instructions are generated using the FALM and a plurality of template-based code generation techniques, wherein the plurality of template-based code generation techniques transform structured text into a plurality of datasets.

9. The application server of claim 8, wherein in particular each dataset of the plurality of datasets comprises a pre-defined data structure.

10. The application server of claim 6, wherein the machine executable instructions are generated as Python visualization codes, and wherein the operations further comprise translating the Python visualization codes into natural language-based instructions for providing as inputs to a plurality of LLMs for identifying data stored in a database for visualization and a chart title for the visual representation of the data,
in particular wherein the operations further comprise tuning the natural language-based instructions.

11. The application server of claim 6, wherein the machine executable instructions are executed to access a database configured to store historical data associated with one or more of: revenue, profits, assets, earning-per-share, revenue growth, and employees.

12. The application server of claim **11,** wherein the generating the visual representation of the data according to the received user query request comprises aggregating the data stored in the database according to filtering criteria, wherein the filtering criteria comprises one or more of an industry, a time period, and a geographic location or region.

13. The application server of claim 6, wherein the visual representation of data comprises one or more of a bar chart, a line chart, and a scatterplot.

14. At least one computer-readable medium (CRM) storing computer-readable instructions, which, when executed by at least one processor of an application server, cause the application server to perform operations comprising:
receiving a user query request for generating a visual representation of data;
validating the user query request to determine whether the user query request is safe to accept;
generating, based upon the validation, machine executable instructions corresponding to the user query request using a Fortune Analytics Language Model (FALM), wherein the FALM is a pretrained Large Language Model (LLM);
executing the machine executable instructions; and
generating, based upon executing the machine executable instructions, a machine generated visual representation of the data.

15. The at least one CRM of claim 14, wherein the machine executable instructions are generated by:
analyzing the user query request to determine a requested form of the visual representation of the data; and
generating the machine executable instructions to provide the visual representation of data according to the requested form.
